# EUROPEAN PATENT APPLICATION

(11) **EP 4 318 175 A1**
(43) Date of publication of application: **07.02.2024**
(21) Application number: 22774909.0
(22) Date of filing: 28.02.2022
(51) Int. Cl.: G06F 1/16, H05K 5/03

(54) **ELECTRONIC DEVICE**

(30) Priority: 24.03.2021 JP 2021050057
(71) Applicant: Panasonic Intellectual Property Management Co., Ltd., Kadoma-shi, Osaka 571-0057 (JP)
(72) Inventor: FURUJIKU Masaru, Kadoma-shi, Osaka 571-0057 (JP); TERAMOTO Ryusuke, Kadoma-shi, Osaka 571-0057 (JP); HIGASHINO Nobuya, Kadoma-shi, Osaka 571-0057 (JP)
(74) Representative: Novagraaf International SA
(86) International application number: PCT/JP2022/008125
(87) International publication number: WO 2022/202111

(57) **Abstract**

An electronic device includes a housing, a cover, and a connection part. The housing includes a first surface, a second surface intersecting the first surface, a corner including a curved surface and an opening, the curved surface connecting the first surface and the second surface, the opening extending along the curved surface and along a placement direction of the first surface, the second surface, and the corner. The cover is disposed inside the housing while being movable along the placement direction between a closed position where the opening is closed and an open position where the opening is opened. The connection part is disposed at a position inside the housing where the cover is positioned between the connection part and the opening, the connection part including a connection port exposed to an outside through the opening when the cover is positioned at the open position.

## Description

### TECHNICAL FIELD

The present disclosure relates to an electronic device.

### BACKGROUND ART

PTL 1 discloses an electronic device including a housing having a terminal connection opening through which an external connection terminal is exposed.

### Citation List

### Patent Literature

PTL 1: Unexamined Japanese Patent Publication No. 2014-222744

### SUMMARY OF THE INVENTION

The electronic device of PTL 1 has room for improvement in its miniaturization.

It is an object of the present disclosure to provide an electronic device that can be miniaturized.

An electronic device according to an aspect of the present disclosure includes: a housing including a first surface, a second surface intersecting the first surface, a corner including a curved surface and an opening, the curved surface connecting the first surface and the second surface, the opening extending along the curved surface and along a placement direction of the first surface, the second surface, and the corner; a cover disposed inside the housing while being movable along the placement direction between a closed position where the opening is closed and an open position where the opening is opened; and a connection part disposed at a position inside the housing where the cover is positioned between the connection part and the opening, the connection part including a connection port exposed to an outside through the opening when the cover is positioned at the open position.

The present disclosure enables providing an electronic device that can be miniaturized.

### BRIEF DESCRIPTION OF THE DRAWINGS

Fig. 1 is a perspective view illustrating an electronic device according to an exemplary embodiment of the present disclosure.
Fig. 2 is a partial perspective view illustrating a first unit of the electronic device of Fig. 1 with a cover positioned at an open position.
Fig. 3 is a partial perspective view illustrating the first unit of the electronic device of Fig. 1 with the cover positioned at a closed position.
Fig. 4 is a cross-sectional view taken along line IV-IV of Fig. 2.
Fig. 5 is a cross-sectional view taken along line V-V of Fig. 3.

### DESCRIPTION OF EMBODIMENT

### (Background to present disclosure)

The electronic device of PTL 1 includes the terminal connection opening provided close to a curved corner of an upper end of the housing. The terminal connection opening is covered with a terminal cover. The terminal cover includes a cover body and a belt-shaped a connection part in a belt shape for connecting the cover body to the housing. The connection part is accommodated in a connection hole extending along the curved shape of the corner.

The electronic device of PTL 1 allows an external connection terminal to be disposed in a space adjacent to the corner in the housing, the external connection terminal being exposed through the terminal connection opening, so that the corner is likely to have a dead space, and thus placement of components of the electronic device may be restricted.

The inventors of the present invention have devised an electronic device capable of achieving miniaturization, and have reached the invention below.

An electronic device according to a first aspect of the present disclosure includes: a housing including a first surface, a second surface intersecting the first surface, a corner including a curved surface and an opening, the curved surface connecting the first surface and the second surface, the opening extending along the curved surface and along a placement direction of the first surface, the second surface, and the corner; a cover disposed inside the housing while being movable along the placement direction between a closed position where the opening is closed and an open position where the opening is opened; and a connection part disposed at a position inside the housing where the cover is positioned between the connection part and the opening, the connection part including a connection port exposed to an outside through the opening when the cover is positioned at the open position.

The electronic device of the first aspect includes the opening provided at the corner with the curved surface of the housing, the opening being opened and closed by the cover. The housing is provided inside with the connection part including the connection port that can be exposed through the opening, and with the cover disposed between the connection port and the opening. Such a configuration increases a degree of freedom of placement of components inside the housing, and thus enables fabricating an electronic device that can be miniaturized.

An electronic device according to a second aspect of the present disclosure is configured such that the cover is in a plate shape extending along the curved surface and includes a lid part configured to cover the connection port when the cover is positioned at the closed position, and a first end part that is far from the connection port in the placement direction, and the first end part has a thickness smaller than a thickness of the lid part.

The electronic device of the second aspect enables preventing the first end part of the cover from being caught by another member in the housing when the cover is moved. As a result, the cover can be moved smoothly.

An electronic device according to a third aspect of the present disclosure further includes an operation member that protrudes from the cover to the outside of the housing through the opening, and the operation member includes a knob extending in a thickness direction of the cover, and a reinforcement part connected to the knob and the cover.

The electronic device of the third aspect enables the cover to be easily moved.

An electronic device according to a fourth aspect of the present disclosure further includes a sealing member disposed surrounding a periphery of the connection port, and the sealing member includes a contact part that comes into contact with the cover when the cover is positioned at the closed position to seal between an opening edge of the connection port and the cover in a watertight manner.

The electronic device of the fourth aspect enables enhancing waterproof performance of the electronic device.

An electronic device according to a fifth aspect of the present disclosure is configured such that the cover includes a second end part close to the connection port in the placement direction, the second end part including a first protrusion that protrudes in a direction intersecting the curved surface and being away from the connection port, and the housing includes: an accommodation part that is disposed between the connection port and the opening in a direction intersecting the curved surface inside the housing and that accommodates the second end part when the cover is positioned at the closed position; and a second protrusion that protrudes in a direction approaching the connection port from an inner surface far from the connection port in a direction intersecting the curved surface, the inner surface being included in inner surfaces constituting the accommodation part of the housing, the second protrusion being positioned closer to the opening than the first protrusion in the placement direction when the cover is positioned at the closed position to restrict movement of the cover from the closed position to the open position in the placement direction.

The electronic device of the fifth aspect enables holding the cover at the closed position.

Hereinafter, an exemplary embodiment of the present disclosure will be described with reference to the drawings. The drawings illustrate the same components that are denoted by the same reference numerals, and that will not be described as appropriate. The exemplary embodiment is an example instead of limiting the present disclosure, and thus can be appropriately changed without departing from the gist of the present disclosure.

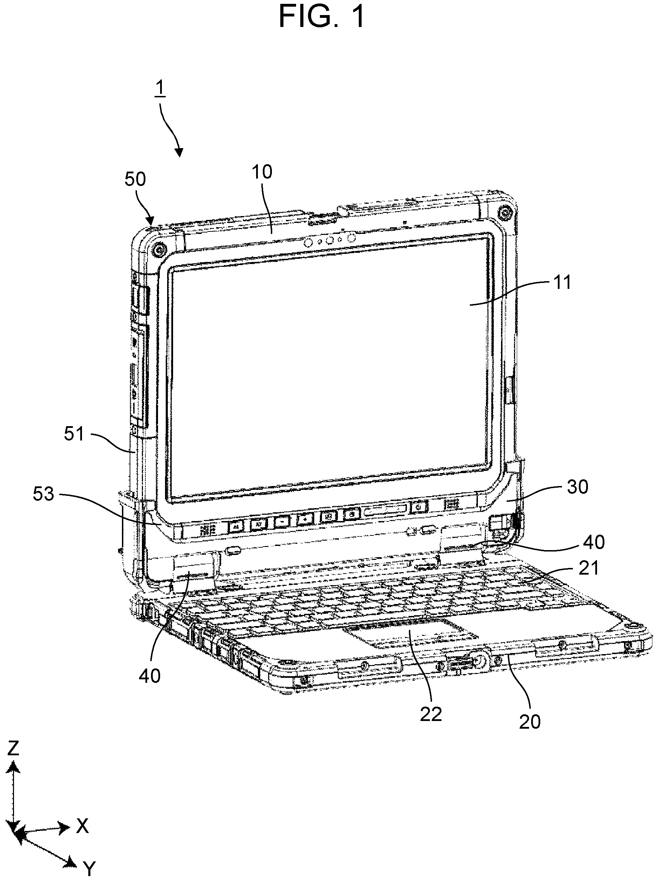

Examples of electronic device 1 according to the present exemplary embodiment include a notebook type personal computer (in other words, a laptop PC) as illustrated in Fig. 1. Electronic device 1 includes first unit 10 and second unit 20. First unit 10 is detachably attached to second unit 20. That is, electronic device 1 is configured as a so-called detachable computer.

First unit 10 is a tablet computer having display 11. Display 11 is, for example, a liquid crystal display panel and includes a touch panel capable of receiving a user's touch operation. First unit 10 incorporates a central processing unit (CPU), a volatile storage (RAM), a nonvolatile storage (ROM, SSD, or the like), a battery, and the like. The nonvolatile storage device (ROM, SSD, or the like) stores an operating system (OS), various application programs, various data, and the like. The central processing unit (CPU) executes arithmetic processing by reading the OS, the application programs, and the various data, thereby achieving various functions.

Second unit 20 is a station to which first unit 10 is detachably attached. Second unit 20 includes input units 21, 22, socket 30, and hinges 40. Input units 21, 22 include, for example, a keyboard and a touch pad, and are configured such that a user can perform input processing.

Socket 30 detachably houses first unit 10. Socket 30 is disposed at one end in a depth direction of second unit 20 (e.g., the Y direction), and is connected to second unit 20 with hinges 40.

Hinge 40 has a rotation shaft extending along a width direction of electronic device 1 (e.g., the X direction), and socket 30 can be held at any angle with respect to second unit 20 by rotating socket 30 about the rotation shaft. For example, holding socket 30 at an angle of approximately 90 degrees with respect to second unit 20 with hinges 40 as illustrated in Fig. 1 brings first unit 10 into an open state at an angle of 90 degrees with respect to second unit 20. Additionally, holding first unit 10 at an angle of substantially 0 degrees with respect to second unit 20 with hinges 40 enables first unit 10 to be brought into a closed state. The term, "closed state", means that first unit 10 and second unit 20 face each other closely and are substantially parallel to each other.

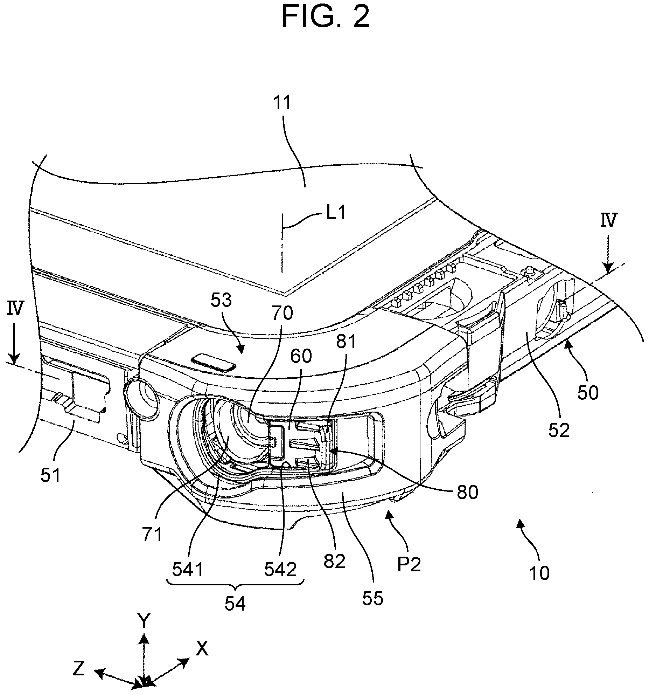

Next, a configuration of first unit 10 will be described. Figs. 2 to 5 each do not illustrate a part of components constituting first unit 10.

As illustrated in Figs. 1 and 2, first unit 10 includes housing 50, cover 60, and connection part 70. Cover 60 is provided with operation member 80.

As illustrated in Figs. 1 and 2, housing 50 has a substantially rectangular plate shape, for example, and includes first surface 51, second surface 52, and corner 53. As illustrated in Fig. 2, each of first surface 51 and second surface 52 constitutes corresponding one of side surfaces expanding along a thickness direction (e.g., a Y direction) of housing 50. Second surface 52 intersects (e.g., orthogonal to) first surface 51, and corner 53 connects first surface 51 and second surface 52.

As illustrated in Fig. 2, corner 53 of housing 50 includes curved surface 55 provided with opening 54. Curved surface 55 is curved around virtual straight line L1 extending along first surface 51 and second surface 52 (or in the thickness direction of the housing 50). Opening 54 extends along curved surface 55 in the placement direction of first surface 51, second surface 52, and corner 53 (or a circumferential direction around the thickness direction of housing 50, the circumferential direction being simply referred to below as a placement direction). Opening 54 in the present exemplary embodiment includes first opening 541 disposed at an end close to first surface 51 in the placement direction and second opening 542 extending from first opening 541 toward second surface 52 along the placement direction. First opening 541 has a substantially circular shape. Connection port 71 of connection part 70 is disposed to enable exposure of connection port 71 to the outside of housing 50 through first opening 541. Second opening 542 has a substantially rectangular shape and is disposed in the placement direction as a longitudinal direction.

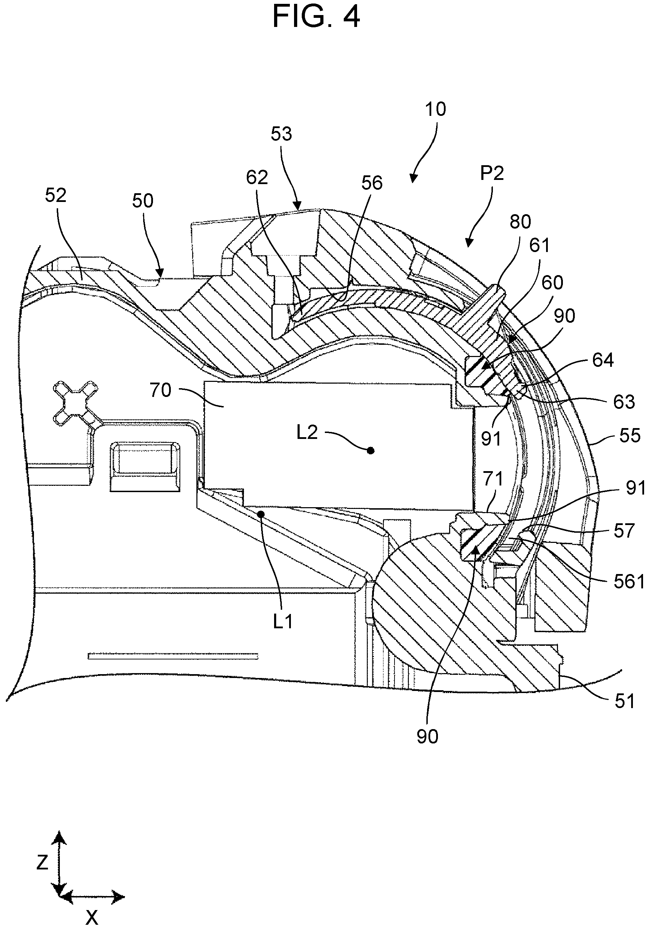

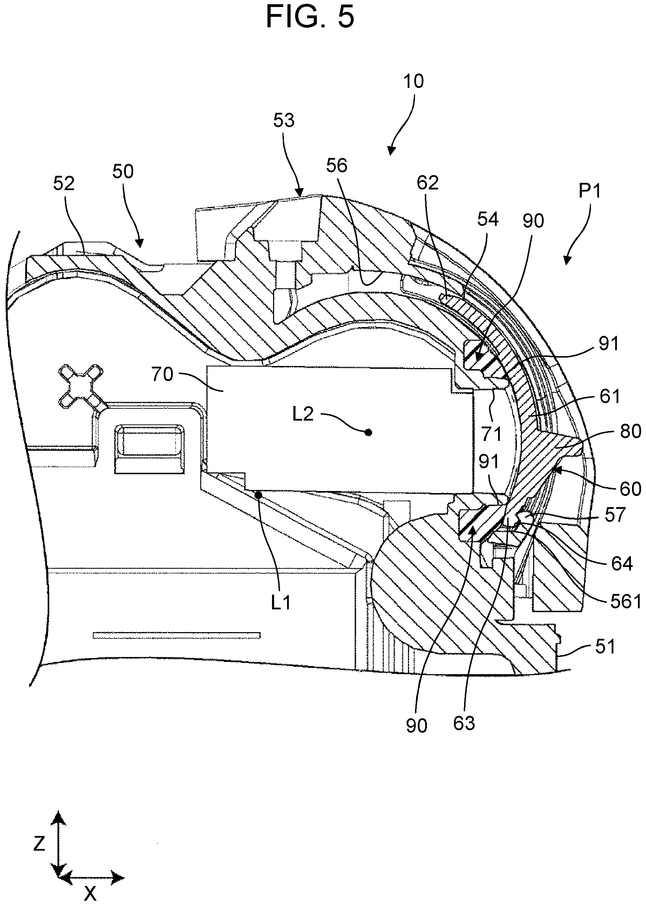

As illustrated in Fig. 4, corner 53 is provided inside with accommodation part 56 that accommodates cover 60. Accommodation part 56 is disposed between connection port 71 and opening 54 in a direction (e.g., in a radial direction with respect to virtual straight line L2 to be described later) intersecting curved surface 55 inside housing 50. Accommodation part 56 extends in the placement direction along a curved shape of cover 60 to be connected to opening 54, and is configured to allow cover 60 to be slid and moved in the placement direction. As illustrated in Fig. 5, accommodation part 56 includes region 561 for accommodating second end part 63 of cover 60 to be described later when cover 60 is positioned at closed position P1.

As illustrated in Fig. 5, housing 50 in the present exemplary embodiment includes protrusion 57 (an example of the second protrusion) provided on an inner surface constituting region 561. Protrusion 57 protrudes in a direction approaching connection port 71 from an inner surface of housing 50, the inner surface being far from connection port 71 in a direction intersecting curved surface 55, and comes into contact with protrusion 64 of cover 60 to be described later when cover 60 is slid and moved. When cover 60 is positioned at closed position P1, protrusion 57 is positioned closer to opening 54 than protrusion 64 of cover 60 to be described later in the placement direction, and restricts movement of cover 60 from closed position P1 to open position P2 in the placement direction of cover 60.

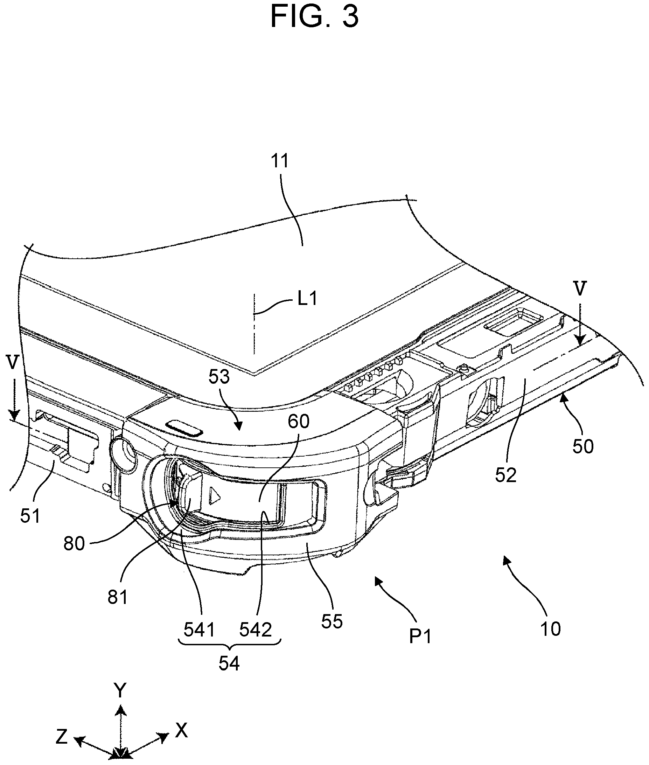

As illustrated in Figs. 2 and 3, cover 60 is disposed inside housing 50 while being able to be slid and moved along the placement direction between closed position P1 where opening 54 is closed and open position P2 where opening 54 is opened. As illustrated in Figs. 4 and 5, cover 60 in the present exemplary embodiment is formed in an arcuate plate shape that extends along curved surface 55 while being curved around virtual straight line L2 extending in the thickness direction of housing 50, and is configured to be able to close opening 54. Virtual straight line L2 extends substantially parallel to virtual straight line L1 and is positioned closer to curved surface 55 than virtual straight line L1. That is, cover 60 is curved with a curvature larger than that of curved surface 55. This configuration prevents operation member 80 to be described later from protruding from curved surface 55 when cover 60 is positioned at closed position P1, thereby preventing unintended movement of cover 60.

As illustrated in Fig. 5, cover 60 includes lid part 61 configured to cover connection port 71 of connection part 70 when cover 60 is positioned at closed position P1, first end part 62 far from connection port 71 in the placement direction, and second end part 63 close to connection port 71 in the placement direction. Cover 60 in the present exemplary embodiment includes first end part 62 having a thickness (e.g., a radial dimension with respect to virtual straight line L2) smaller than that of lid part 61. Second end part 63 includes protrusion 64 (an example of the first protrusion) protruding in the direction intersecting curved surface 55 and being away from connection port 71, and is configured to be elastically deformable in the direction intersecting curved surface 55.

When cover 60 is moved from open position P2 to closed position P1, protrusion 64 of second end part 63 comes into contact with protrusion 57 disposed in region 561 of accommodation part 56, and then elastically deforms in the direction intersecting curved surface 55 and approaching connection port 71 to get over protrusion 57 of accommodation part 56, and moves to a position farther from opening 54 than protrusion 57 of accommodation part 56. This state restricts movement of cover 60 from closed position P1 to open position P2 in the placement direction.

Connection part 70 is a DC jack, for example, and is disposed inside housing 50 with cover 60 positioned between the connection part 70 and opening 54 as illustrated in Figs. 4 and 5. Connection part 70 includes connection port 71 exposed to the outside through opening 54 when cover 60 is positioned at open position P2. Connection part 70 includes a connecting terminal exposed through connection port 71.

As illustrated in Fig. 2, operation member 80 protrudes from cover 60 to the outside of housing 50 through opening 54. Operation member 80 includes knob 81 extending in the thickness direction of cover 60, and reinforcement part 82 connected to knob 81 and cover 60. Knob 81 has a substantially quadrangular plate shape, and is disposed with its plate surfaces intersecting with each other in the placement direction. Reinforcement part 82 includes three ribs disposed at intervals in a width direction (e.g., in the Y direction) of cover 60 intersecting the placement direction. Reinforcement part 82 is provided on the plate surface of knob 81, the plate surface being close to first surface 51 in the placement direction.

As illustrated in Figs. 4 and 5, sealing member 90 is provided around connection port 71 of connection part 70. Sealing member 90 is composed of an elastic member such as rubber, and surrounds connection port 71. Sealing member 90 includes contact part 91 that seals between an opening edge of connection port 71 and cover 60 in a watertight manner. Contact part 91 comes into contact with lid part 61 of cover 60 when cover 60 is positioned at closed position P1. This configuration prevents water and dust from entering connection part 70 through accommodation part 56.

Electronic device 1 can exhibit the following effects.

Electronic device 1 includes opening 54 provided at corner 53 with curved surface 55 of housing 50, opening 54 being opened and closed by cover 60. Housing 50 is provided inside with connection part 70 including connection port 71 that can be exposed through opening 54, and with cover 60 disposed between connection port 71 and opening 54. Such a configuration increases a degree of freedom of placement of components inside housing 50, and thus enables fabricating electronic device 1 that can be miniaturized.

Cover 60 has a plate shape extending along curved surface 55, and includes lid part 61 configured to cover connection port 71 when cover 60 is positioned at closed position P1, and first end part 62 far from connection port 71 in the placement direction. First end part 62 has a thickness smaller than a thickness of lid part 61. Such a configuration enables preventing first end part 62 of cover 60 from being caught by another member in housing 50 when cover 60 is moved. As a result, cover 60 can be moved smoothly.

Operation member 80 protruding from cover 60 to the outside of housing 50 through opening 54 is provided. Operation member 80 includes knob 81 extending in the thickness direction of cover 60, and reinforcement part 82 connected to knob 81 and cover 60. Such a configuration enables the cover to be moved easily.

Sealing member 90 disposed surrounding a periphery of connection port 71 is further provided. Sealing member 90 includes contact part 91 that comes into contact with cover 60 when cover 60 is positioned at closed position P1, and thus seals between an opening edge of connection port 71 and cover 60 in a watertight manner. Such a configuration enables enhancing waterproof performance of electronic device 1.

Cover 60 includes second end part 63 close to connection port 71 in the placement direction, and second end part 63 includes protrusion 64 protruding in a direction intersecting curved surface 55 and being away from connection port 71. Housing 50 includes accommodation part 56 and protrusion 57. Accommodation part 56 is disposed between connection port 71 and opening 54 in the direction intersecting curved surface 55 inside housing 50, and houses second end part 63 when cover 60 is positioned at closed position P1. Protrusion 57 protrudes in the direction approaching connection port 71 from an inner surface far from connection port 71 in the direction intersecting curved surface 55, the inner surface being included in inner surfaces constituting accommodation part 56 of housing 50. When cover 60 is positioned at closed position P1, protrusion 57 is positioned closer to opening 54 than protrusion 64 in the placement direction, and restricts movement of cover 60 from closed position P1 to open position P2 in the placement direction of cover 60. Such a configuration enables cover 60 to be held at closed position P1.

Electronic device 1 can also be configured as follows.

Electronic device 1 allows one or both of operation member 80 and sealing member 90 to be eliminated.

Housing 50 is not limited to a substantially rectangular plate shape, and may be formed in any shape having a first surface, a second surface intersecting the first surface, and a corner connecting the first surface and the second surface.

Each of first surface 51 and second surface 52 is not limited to a side surface extending along the thickness direction of housing 50, and may be a surface (e.g., a surface provided with display 11) extending along a direction intersecting the thickness direction of housing 50.

Cover 60 is not limited to allowing first end part 62 to be smaller in thickness than lid part 61, and may be substantially equal in thickness as a whole.

Protrusion 64 of cover 60 may be eliminated. In this case, protrusion 57 of housing 50 can also be eliminated.

Cover 60 is not limited to being curved with a curvature larger than that of curved surface 55, and may be curved with a curvature equal to that of curved surface 55 or may be curved with a curvature smaller than that of curved surface 55.

Any proper combination of the embodiments or modifications among the various exemplary embodiments and modifications may have the effects of the embodiments or modifications. Combination of exemplary embodiments, combination of examples, or combination of exemplary embodiments and examples are possible, and combination of features in different exemplary embodiments or examples are also possible.

Although the present disclosure has been described in connection with a preferable exemplary embodiment with reference to the accompanying drawings, various modifications and corrections are obvious to those skilled in the art. Such modifications and corrections are to be understood as being included within the scope of the present disclosure as set forth in the appended scope of claims unless departing from the scope of the present disclosure.

### INDUSTRIAL APPLICABILITY

The present disclosure is widely applicable to electronic devices including notebook personal computers.

### REFERENCE MARKS IN THE DRAWINGS

1: electronic device
10: first unit
11: display
20: second unit
21, 22: input unit
30: socket
40: hinge
50: housing
51: first surface
52: second surface
53: corner
54: opening
55: curved surface
56: accommodation part
561: region
57: protrusion
60: cover
61: lid part
62: first end part
63: second end part
64: protrusion
70: connection part
71: connection port
80: operation member
81: knob
82: reinforcement part
90: sealing member
91: contact part
P1: closed position
P2: open position

## Claims

1. An electronic device comprising:
a housing including a first surface, a second surface intersecting the first surface, a corner including a curved surface and an opening, the curved surface connecting the first surface and the second surface, the opening extending along the curved surface and along a placement direction of the first surface, the second surface, and the corner;
a cover disposed inside the housing while being movable along the placement direction between a closed position where the opening is closed and an open position where the opening is opened; and
a connection part disposed at a position inside the housing where the cover is positioned between the connection part and the opening, the connection part including a connection port exposed to an outside through the opening when the cover is positioned at the open position.

2. The electronic device according to Claim 1, wherein
the cover is in a plate shape extending along the curved surface and includes a lid part configured to cover the connection port when the cover is positioned at the closed position, and a first end part that is far from the connection port in the placement direction, and
the first end part has a thickness smaller than a thickness of the lid part.

3. The electronic device according to Claim 1 or 2, further comprising an operation member that protrudes from the cover to the outside of the housing through the opening,
wherein the operation member includes a knob extending in a thickness direction of the cover, and a reinforcement part connected to the knob and the cover.

4. The electronic device according to any one of Claims 1 to 3, further comprising a sealing member disposed surrounding a periphery of the connection port,
wherein the sealing member includes a contact part that comes into contact with the cover when the cover is positioned at the closed position to seal between an opening edge of the connection port and the cover in a watertight manner.

5. The electronic device according to any one of Claims 1 to 4, wherein
the cover includes a second end part close to the connection port in the placement direction,
the second end part including a first protrusion that protrudes in a direction intersecting the curved surface and being away from the connection port, and
the housing includes
an accommodation part that is disposed between the connection port and the opening in a direction intersecting the curved surface inside the housing and that accommodates the second end part when the cover is positioned at the closed position, and
a second protrusion that protrudes in a direction approaching the connection port from an inner surface far from the connection port in a direction intersecting the curved surface, the inner surface being included in inner surfaces constituting the accommodation part of the housing, the second protrusion being positioned closer to the opening than the first protrusion in the placement direction when the cover is positioned at the closed position to restrict movement of the cover from the closed position to the open position in the placement direction.
